Europäisches Patentamt

European Patent Office

Office européen des brevets

(19)

(11) Veröffentlichungsnummer: **0 141 339**
**B1**

(12) # EUROPÄISCHE PATENTSCHRIFT

(45) Veröffentlichungstag der Patentschrift:
30.03.88

(21) Anmeldenummer: 84112513.1

(22) Anmeldetag: 17.10.84

(51) Int. Cl.⁴: **F 24 D 11/02,** F 24 D 11/00,
F 24 D 3/00, F 24 J 3/00

(54) Vorrichtung zur Wärmerückgewinnung aus Abwasser mit gleichzeitiger Trinkwassereinsparung.

(30) Priorität: 20.10.83 DE 3338189

(43) Veröffentlichungstag der Anmeldung:
15.05.85 Patentblatt 85/20

(45) Bekanntmachung des Hinweises auf die Patenterteilung:
30.03.88 Patentblatt 88/13

(84) Benannte Vertragsstaaten:
AT BE CH DE FR GB IT LI LU NL SE

(56) Entgegenhaltungen:
DE - A - 2 732 639
DE - A - 3 132 562
DE - B - 2 626 468

JOURNAL OF WATER, POLL. CONTR. FED., Band 51, Nr.
8, August 1979, Washington, USA; P.E. BUDDE et al.
"Energy recovery from wastewater treatment plant
effluent", Seiten 2155-2167

(73) Patentinhaber: Kroll, Walter, Baumgarten 6,
A-4724 Neukirchen am Walde (AT)

(72) Erfinder: Kroll, Walter, Baumgarten 6,
A-4724 Neukirchen am Walde (AT)

(74) Vertreter: Zeitler, Giselher, Dipl.-Ing., Herrnstrasse 15,
D-8000 München 22 (DE)

## Beschreibung

Die Erfindung betrifft eine Vorrichtung zur Wärmerückgewinnung aus Abwasser gemäss dem Oberbegriff des Anspruchs 1.

Bei einer bekannten Vorrichtung der gattungsgemässen Art (s. Art. «Energy recovery from wastewater treatment plant effluent» von P.E. Budde et al., erschienen in «Journal of Water Poll. Contr. Fed.» Band 51, Nr. 8, August 1979) wird die den Wärmepumpen zugeführte Wärme demjenigen geklärten Abwasser entzogen, welches das Klärwerk bereits verlassen hat und ansonsten wieder den Flüssen oder dgl. zugeleitet wird. Der Nachteil eines solchen Systems ist darin zu sehen, dass die dem geklärten Abwasser entzogene Wärmeenergie naturgemäss bereits einen geringeren Wärmeinhalt als diejenige des noch ungeklärten Abwassers hat, so dass der Wirkungsgrad der bekannten Vorrichtung nicht besonders hoch ist und darüberhinaus stark vom schwankenden Niveau des Abwasserspiegels beeinflusst wird.

Es ist weiterhin eine Wärmerückgewinnungsvorrichtung bekannt (DE-B-26 26 468), bei der die im Abwasserkanal enthaltene warme Luft als Sekundärmedium genutzt wird, dessen Wärmeenergie durch Wärmpepumpen entzogen wird. Obschon hierbei die Wärmeenergie des noch ungeklärten Abwassers – über die im Abwasserkanal geführte Luft als Zwischenwärmeträger – genutzt wird, ist dennoch der Wirkungsgrad einer solchen Vorrichtung unbefriedigend, da aufgrund der Zwischenschaltung der warmen Abwasserkanalluft als Sekundärmedium die im ungeklärten Abwasser enthaltene Wärmeenergie zwangsläufig nicht vollständig ausgenutzt wird.

Der Erfindung liegt daher die Aufgabe zugrunde, die Vorrichtung der gattungsgemässen Art zur Beseitigung der geschilderten Nachteile derart auszugestalten, dass sie bei geringen Investitionskosten einen guten Wirkungsgrad besitzt und auch noch nachträglich mit geringem Aufwand installiert bzw. verlegt werden kann.

Diese Aufgabe wird bei der erfindungsgemäss ausgestalteten Vorrichtung mit den Merkmalen des Anspruchs 1 gelöst. Vorteilhafte Ausgestaltungen hiervon sind in den weiteren Ansprüchen angegeben.

Der erfindungsgemässen Wärmerückgewinnungsvorrichtung liegt der wesentliche Gedanke zugrunde, anstelle eines gesonderten Wasserkreislaufes als Sekundärmedium das geklärte Abwasser zu verwenden und zu diesem Zweck eine das geklärte Abwasser wenigstens zum Teil aufnehmende Klärwassersammelleitung vorzusehen, die unterhalb des Abwasserniveaus, vorzugsweise entlang des Kanalbodens, im Abwasserkanal verlegt ist. Hierbei steht die Klärwassersammelleitung mit den Wärmepumpen der Abwasserlieferstellen jeweils über eine Zulaufleitung sowie eine Rücklaufleitung in Verbindung, die vorzugsweise im Innern der jeweiligen Abwasserstichleitung verlaufen.

Die direkt im Abwasserstrom erfolgende Anordnung der Klärwassersammelleitung erbringt den wesentlichen Vorteil eines optimalen Wärmetauschwirkungsgrades, da gewährleistet ist, dass die dem Abwasser innewohnende Wärmeenergie direkt mittels Wärmeleitung auf das im Gegenstrom hierzu fliessende geklärte Abwasser übertragen wird. Weiterhin ist sichergestellt, dass die erfindungsgemässe Vorrichtung mit nur geringen Investitionskosten behaftet ist und ausserdem mit wenig Aufwand auch noch nachträglich in den bereits vorhandenen Abwasserkanal verlegt werden kann, da es lediglich erforderlich ist, die Klärwassersammelleitung nachträglich derart in den Abwasserkanal einzusetzen, dass sie im unteren Kanalbereich verläuft und vorzugsweise dem Kanalboden anliegt. Gemäss einer bevorzugten Ausführungsform besteht die Klärwassersammelleitung aus mehreren gesonderten, durch eine Trenn- bzw. Abdeckwand miteinander verbundenen Leitungen.

Bei der erfinungsgemässen Vorrichtung werden demgemäss die Eigenschaften des aus dem Klärwerk ausfliessenden gereinigten Abwassers, nämlich die gegenüber dem Grundwasser um ca. 10°C erhöhte Temperatur und der gegenüber den bisher zur Wärmerückgewinnung verwendeten Abwässern erheblich verbesserte Reinheitsgrad, genutzt. Insbesondere geeignet sind hierbei auch die Klärwasser, die bereits zu Kühlzwecken Verwendung fanden und infolge ihrer während des Kühlvorgangs erreichten Temperatur von 100°C und mehr einen noch höheren Reinheitsgrad aufweisen, da bei diesen Temperaturen bereits viele Bakterien abgetötet werden.

Aufgrund der erfindungsgemässen Führung der Klärwassersammelleitung im Abwasserkanal des Kanalisationsnetzes tritt ein Wärmeaustausch zwischen dem Klärwasser und den aus den Haushalten anfallenden Abwässern höherer Temperatur ein, so dass auf diese Weise auch noch der Wärmeinhalt der in die Kanalisation abfliessenden Abwässer weitgehend genützt wird, ohne dass die Gefahr einer bakteriellen Verseuchung besteht. Ferner wird auch die Erdwärme an das Klärwasser übertragen.

Wenn das Klärwasser der an der Abwasserlieferstelle vorgesehenen Wärmepumpe zugeführt wird, erhält man ausgangsseitig nach dem Wärmeentzug durch die Wärmepumpe auf ca. 4°C abgekühltes Klärwasser. Die Reinheit dieses Klärwassers ist unverändert geblieben und noch nahe dem für Trinkwasser geforderten Reinheitsgrad. Bedenken gegenüber einer Verwendung dieses Klärwassers, beisp. für Toilettenspülungen, in Hydranten, zur Bewässerung von Gartenanlagen, Springbrunnen od. dgl., bestehen nicht, so dass ein Teil dieses Klärwassers vor der Rückleitung in die Klärwassersammelleitung bzw. in den Abwasserkanal einer solchen Verwendung zugeführt werden kann und eine Ersparnis an Trinkwasser, das bisher für diese Zwecke verbraucht wurde, von ca. 60% erreicht wird.

Die erfindungsgemässe Vorrichtung führt zu einer kostensparenden Mehrfachnutzung bereits vorhandener Einrichtungen und hat insbeson-

re den Vorteil, dass sie auch nachträglich in dem bereits vorhandenen Abwassernetz verlegt werden kann, ohne dass hierbei die Strassenzüge aufgebrochen und Zerstörungen bereits vorhandener Einrichtungen in Kauf genommen werden müssen. Die Verlegung der Klärwassersammelleitung kann vorteilhafterweise durch die in jedem Kanalisationsnetz in Abständen vorgesehenen Inspektionsschächte erfolgen. Hierdurch bleiben die bei Anwendung der erfindungsgemässen Vorrichtung anfallenden Kosten sehr gering, so dass die Installationskosten in kurzer Zeit amortisiert sind. Man kann somit in den ersten Jahren mit einer Einsparung von 50% der bisherigen Heizkosten und nach erfolgter Amortisation sogar mit einer Einsparung von 70% rechnen.

Die Erfindung wird im folgenden anhand der Zeichnung näher erläutert.

Es zeigen:

Fig. 1 schematisch im Querschnitt die Wärmerückgewinnungsvorrichtung gemäss der Erfindung;

Fig. 2a eine Vielzahl von mittels einer Trennwand zu einer Klärwassersammelleitung vereinigten Klärwasserleitungen im Querschnitt in einer Ebene ausgebreitet und

Fig. 2b in ihrer in einen Abwasserkanal eingelegten Form;

Fig. 3a ein Stirnende einer Trennwand, das ein Stirnende einer sich in Längsrichtung anschliessenden Trennwand überlappt, auseinandergezogen im Längsschnitt;

Fig. 3b in Draufsicht das unten liegende Trennwandende;

Fig. 4 im Querschnitt eine als Doppelleitungsrohr ausgebildete Klärwasserzulauf- und rücklaufleitung mit Haftmagnet;

Fig. 5 im Querschnitt eine Abwasserstichleitung mit angeformter Klärwasserzulauf- sowie -rücklaufleitung und

Fig. 6 schematisch das im Kreislauf geführte Klärwasserleitungssystem.

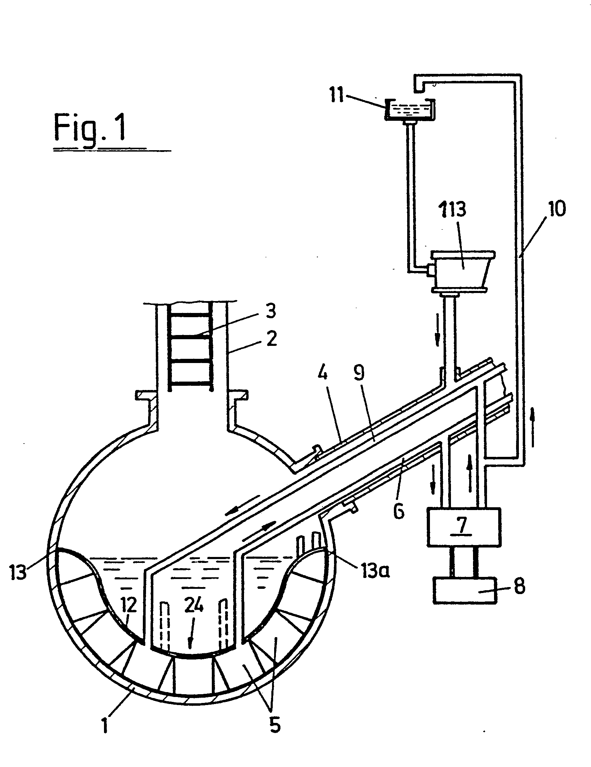

In Fig. 1 ist ein Abwasserkanal 1 gezeigt, wie er unter einer Strassendecke längsverlaufend verlegt ist. In den Abwasserkanal 1 mündet von oben her ein Inspektionsschacht 2, der über Tritteisen 3 begehbar ist.

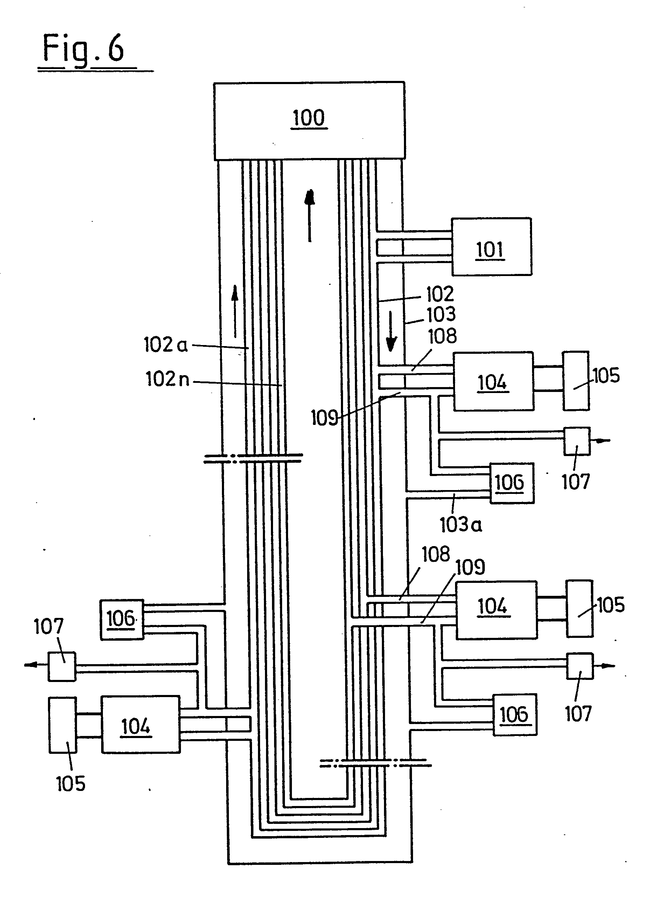

Von dem Abwasserkanal 1 führen Abwasserstichleitungen 4 zu den verschiedenen Abwasserlieferstellen, wie Küche, Bad, Toiletten usw., die in der Zeichnung beispielhaft nur durch eine einzige Toilette 113 angedeutet sind und von denen das Abwasser durch die Abwasserstichleitung 4 in den Abwasserkanal 1 abfliesst. Das Abwasser fliesst im Abwasserkanal 1 zu einem Klärwerk 100 (Fig. 6), das sich in der Regel ausserhalb der Ortschaft in der Nähe eines Flusses befindet. Dort werden die Abwässer gereinigt. Das geklärte Abwasser, im folgenden auch kurz als Klärwasser bezeichnet, hat beim Verlassen des Klärwerks einen Reinheitsgrad, der etwa 90 – 95% dem des Trinkwassers entspricht, und es besitzt ausserdem eine Temperatur von ca. 14 – 15°C.

Das im Klärwerk 100 gereinigte Abwasser (Klärwasser) wird in eine Klärwasserleitung 5 eingeleitet, die im Abwasserkanal 1 entlang des Kanalbodens verlegt und über Klärwasserzulaufleitungen 6, die im Innern der Abwasserstichleitungen 4 verlaufen, jeweils mit an den Abwasserlieferstellen vorgesehenen Wärmepumpen 7 verbunden ist. In jeder dieser Wärmepumpen 7 wird dem Klärwasser Wärmeenergie entzogen, die zur Aufheizung eines Heizungskreislaufes 8 und/oder zur Erhitzung von Brauchwasser für die angeschlossenen Haushaltungen verwendet wird. Das dann aus der Wärmepumpe 7 austretende Klärwasser hat nur noch eine Temperatur von ca. 4°C und fliesst in Klärwasserrücklaufleitungen 9, die ebenfalls in den Abwasserstichleitungen 4 verlegt sind, zurück in die Klärwassersammelleitung 5.

Um das Klärwasser nach in der Wärmepumpe 7 erfolgtem Wärmeentzug noch weiterhin nutzen zu können, ist eine von der Klärwasserrücklaufleitung 9 abzweigende Klärwasserabzweigleitung 10 vorgesehen, die zu dem in der Zeichnung beispielhaft angedeuteten Spülkasten 11 der Toilette 113 führt. Die Toilettenspülanlage 113, 11 ist hier stellvertretend für alle diejenigen Verbraucherstellen angedeutet, in denen das Wasser keine Trinkwasserqualität haben muss, wie beisp. bei Hydranten, Garten- und Parkbewässerungsanlagen, Springbrunnen und dgl. Da das hier angelieferte, auf 4°C abgekühlte Klärwasser, wie oben erwähnt, bis nahezu 95% an die für Trinkwasser geforderte Reinheit herankommt, kann es bedenkenlos den genannten Verwendungszwecken zugeführt werden, ohne die Verbreitung von Infektionen befürchten zu müssen. Die beispielsweise in der Toilettenspülanlage 113, 11 verbrauchte Klärwassermenge fliesst anschliessend als Abwasser durch die Abwasserstichleitung 4 in den Abwasserkanal 1 und von dort wieder dem Klärwerk 100 zu erneuter Klärung zu.

Aufgrund der beschriebenen Ausbildung der Klärwassersammelleitung 5 einschliesslich der hiervon abzweigenden Klärwasserzulauf- bzw. -rücklaufleitungen 6, 9 in dem im Kanalisationsnetz der Ortschaft bereits vorhandenen Abwasserkanal 1 und dessen Abwasserstichleitungen 4 sind die Investitionskosten für die Verlegung dieser Klärwassersammelleitung 5 äusserst gering. Insbesondere lässt sich die Klärwassersammelleitung 5 noch nachträglich verlegen, ohne dass die Strassenzüge nochmals aufgegraben werden müssen. Ebenfalls ist die gleichzeitige Errichtung der beschriebenen Wärmerückgewinnungsvorrichtung mit dem Kanalisationsnetz und mit den Hausanschlüssen problemlos, da die innerhalb der Abwässerkanäle 1, 4 verlaufenden Klärwasserzulauf- bzw. -rücklaufleitungen 6, 9 gleichzeitig mitverlegt werden können. Weiterhin können als Abwasserkanäle entsprechend ausgebildete Rohre verwendet werden, in welche die Klärwasserleitungen integriert sind (nicht dargestellt).

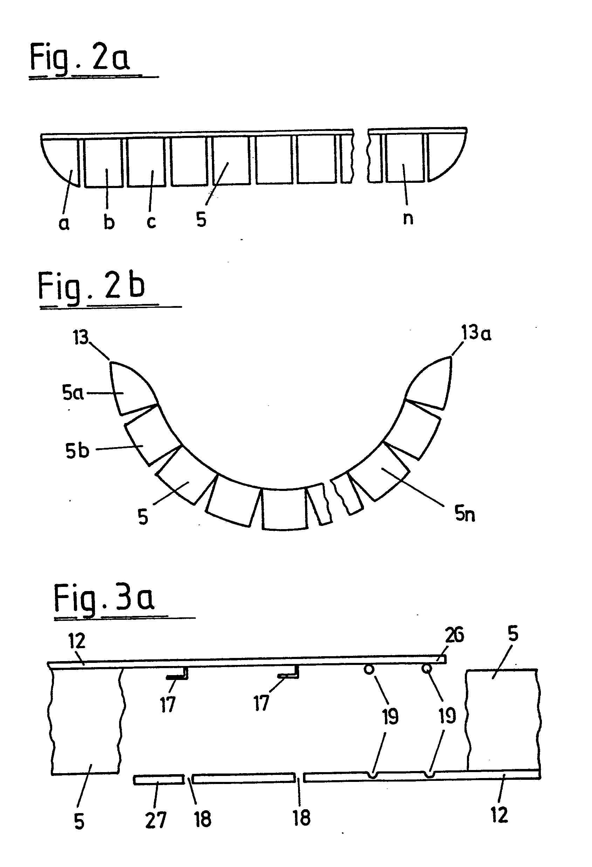

Um die Kosten für nachträgliche Verlegearbeiten so gering wie möglich zu halten, ist, wie aus Fig. 2a und 2b ersichtlich, die Klärwassersammelleitung 5 aus einer Vielzahl von Schläuchen bzw. Leitungen 5a, b, c...n aus elastischem Material gebildet, die parallel zueinander verlaufen und als querschnittlich etwa rechteckige Kammern ausgestaltet sowie durch eine gemeinsame Trennwand 12 verbunden sind. Diese Trennwand 12 besteht ebenfalls aus biegsamem Material und liegt mit ihren beiden Längsrändern 13, 13a der Innenwand des Abwasserkanals 1 an, wobei der Mittelbereich 24 (Fig. 1) im wesentlichen eben und begehbar ausgestaltet ist.

Die mit der Trennwand 12 verbundenen einzelnen Klärwasserleitungen 5a, b...n sind so in den unteren Teil des Abwasserkanals 1 eingelegt, dass sie sich mit ihrer Unterseite am Boden des Abwasserkanals 1 abstützen und sich die Trennwand 12 mit ihren beiden Längsrändern 13, 13a an die Kanalinnenwand anschmiegt. Dadurch bleibt der unterhalb der Trennwand 12 gelegene Teilraum des Abwasserkanals 1 praktisch frei von Abwasser, währen das oberhalb der Trennwand 12 zum Klärwerk fliessende Abwasser ungehindert strömen kann, ohne dass unzugängliche Verschmutzungen zu befürchten sind. Da die Oberseite der Trennwand 12 keinerlei Kanten oder Winkel bildet, können sich auch keinerlei Schmutzstoffe oder sonstige Ablagerungen absetzen, so dass die Trennwandoberfläche leicht zu reinigen ist.

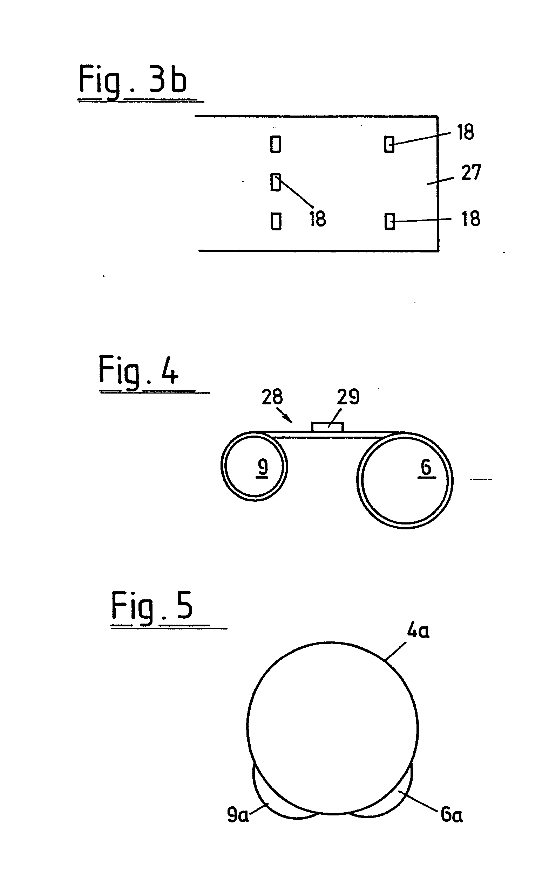

Wie aus Fig. 3a und 3b ersichtlich, erfolgt die Verbindung von in Längsrichtung aneinandergrenzenden Klärwassersammelleitungen 5, 5 dadurch, dass das eine Stirnende 26 der Trennwand 12, das auf seiner Unterseite mit Haken 17 versehen ist, das andere freie Stirnende 27 der sich anschliessenden Trennwand 12 überlappt, wobei die Haken 17 in zugeordnete Öffnungen 18 des anderen Stirnendes 27 eingreifen und so ein Auseinanderrutschen der Trennwandenden 26, 27 verhindern. Eine weitere dichtende Verbindung für die aneinandergrenzenden Trennwandenden 26, 27 ist nach Art eines ineinandergreifenden Druckknopfverschlusses 19 in den beiden sich überlappenden Stirnenden 26, 27 vorgesehen.

Die sich im Verbindungsbereich der Trennwandenden 26, 27 befindenden einzelnen Leitungen 5a, b...n, sind in einer entsprechenden Länge ebenfalls übereinander geschoben. Wenn dann die Trennwandenden 26, 27 miteinander verbunden sind, ist gewährleistet, dass auch die Leitungsenden nicht auseinanderrutschen können.

Bei der abgewandelten Ausführungsform gemäss Fig. 4 ist die Klärwasserzulaufleitung 6 zusammen mit der Klärwasserrücklaufleitung 9 als Einheit in Form einer Doppelleitung 28 ausgebildet, die unter Verwendung von Haftmagneten 29 an der gegenüberliegenden abwasserfreien Innenwand der Abwasserstichleitung 4, die fast immer aus Eisenrohr besteht, befestigt ist. Hierbei ist der Durchmesser der Klärwasserrücklaufleitung 9 kleiner als der der Klärwasserzulaufleitung 6 gewählt.

Bei der weiterhin abgewandelten Ausführungsform gemäss Fig. 5 ist eine Abwasserstichleitung 4a vorgesehen, der die beiden Klärwasserzulauf- bzw. -rücklaufleitungen 6a, 9 als flache Ansätze angeformt sind. Hierbei bleibt der Wärmetauscheffekt erhalten, und Ablagerungen aus dem Abwasser werden vermieden.

Die beschriebene Wärmerückgewinnungsvorrichtung lässt sich in der aus Fig. 6 ersichtlichen Weise folgendermassen installieren:

Das aus einem Klärwerk 100 bzw. aus Kühlanlagen 101 von Elektrizitätswerken oder anderen industriellen Anlagen abfliessende Klärwasser wird mittels nicht dargestellter Umwälzpumpen in einer Klärwassersammelleitung 102 im Gegenstrom zu dem im Abwasserkanalnetz 103 dem Klärwerk 100 zufliessenden Abwasser gepumpt. Um die Strömungsgeschwindigkeit gegen das Leitungsgefälle und gegen die Reibungsverluste in den einzelnen Leitungen 102a...n der Klärwassersammelleitung 102 aufrechtzuerhalten, sind nicht dargestellte Relaisstationen mit Umwälzpumpen vorgesehen. Die für deren Betrieb erforderlichen Motoren können ohne baulichen Aufwand z.B. in Litfasssäulen untergebracht sein.

Das Klärwasser wird über Klärwasserzulaufleitungen 108 einer ersten Wärmepumpe 104 zugeführt, in der ihm die Wärme für den Betrieb eines Heizungskreises 105 entzogen wird. Das aus der Wärmepumpe 104 abfliessende gekühlte Klärwasser wird zu einem Teil, zur Trinkwasserersparnis, über Abzweigleitungen Verbrauchern 106 zugeführt, die entweder das Klärwasser in Toilettenspülkästen benützen und von dort als Abwasser über Abwasserstichleitungen 103a in den Abwasserkanal 103 einleiten oder das Klärwasser in Bewässerungsanlagen (Hydranten und dgl.) 107 verbrauchen. Der restliche Teil des aus der Wärmepumpe 104 abfliessenden gekühlten Klärwassers strömt über Klärwasserrücklaufleitungen 109 in eine der Leitungen 102a...n der Klärwassersammelleitung 102 zurück.

Um den Wärmeinhalt des in den einzelnen Klärwasserleitungen 102a...n strömenden Klärwassers nicht durch das über die Rücklaufleitungen 109 in die Klärwasseresammelleitung 102 zurückströmende abgekühlte Klärwasser zu verringern, ist die Klärwassersammelleitung 102 mit thermostatgesteuerten Ventilen versehen, die einen Zulauf des gekühlten Klärwassers aus der Wärmepumpe 104 nur in diejenigen Leitungen 102a...n ermöglichen, die noch nicht vollständig mit gekühltem Klärwasser gefüllt sind. Infolge des weiteren Verlaufs dieser gekühltes Klärwasser führenden Klärwasserleitungen 102a...n im Abwasserkanal 103 erwärmt sich das Klärwasser durch Wärmetausch mit dem Abwasser und dem Erdreich erneut und kann, sobald es eine am Thermostatventil einstellbare wählbare Temperatur, z.B. 14 bis 15°C, erreicht hat, durch die Klärwasserzulaufleitungen 108 zu einer nächsten Wärmepumpe 104 befördert werden. Mit Klärwasser gefüllte Leitungen 102a...n, deren Temperatur dem Sollwert entspricht, werden durch thermostastgesteuerte Ventile geöffnet, so dass das Klärwasser in die Klärwasserzulaufleitungen 108 und von da zur nächsten Wärmepumpe 104 sowie zu Verbrauchern 105, 106 und dann wieder zurück in eine Klärwasserleitung 102a...n fliesst. Durch dieses Wechselspiel ist die optimale Nutzung der Wärmeenergie möglich und gleichzeitig der geringste Wasserverbrauch erreichbar, da nur die tatsächlich durch Klärwasserbenutzer verbrauchten Wassermengen durch aus der Kläranlage fliessendes Klärwasser ersetzt werden müssen. Diese verbrauchte Menge von Klärwasser erspart jedoch die gleiche Menge an teurerem Trinkwasser.

Nachdem sämtliche Verbraucher 105, 106 bzw. die bei diesen installierten Wärmepumpen 104 mit Klärwasser versorgt sind und das restliche gekühlte Klärwasser in die entsprechenden Leitungen 102a...n der Klärwassersammelleitung 102 zurückgeführt ist, mündet die Klärwassersammelleitung 102 schliesslich wieder im Klärwerk 100, wodurch der Kreislauf geschlossen ist.

## Patentansprüche

1. Vorrichtung zur Wärmerückgewinnung aus Abwasser, welchem durch Wärmepumpen (7) Wärme entzogen wird, die für die Erhitzung von in Heizkreisen (105) umlaufendem Heizwasser und zur Erwärmung von Brauchwasser mit Trinkwasserqualität dient, mit wenigstens einem zu einem Klärwerk (100) führenden Abwasserkanal (1), der über Stichleitungen (4) an Abwasserlieferstellen (113) angeschlossen ist, und mit an den Abwasserlieferstellen (113) vorgesehenen Wärmepumpen (7) zur Entnahme der Wärmeenergie eines im Wärmetausch mit dem Abwasser stehenden, als Sekundärmedium dienenden Wasserkreislaufs, dadurch gekennzeichnet,
- dass im Abwasserstrom des Abwasserkanals (1) eine Klärwassersammelleitung (5) verlegt ist, die das vom Klärwerk (100) kommende geklärte Abwasser wenigstens zum Teil aufnimmt, in wärmetauschender Beziehung zum Abwasserstrom steht und vom Klärwerk (100) zu den Wärmepumpen (7) der Abwasserlieferstellen (113) hingeführt sowie von diesen wieder zurückgeführt ist, und
- dass die Klärwassersammelleitung (5) mit den Wärmepumpen (7) der Abwasserlieferstellen (113) jeweils über eine Zulaufleitung (6) sowie eine Rücklaufleitung (9) verbunden ist.

2. Vorrichtung nach Anspruch 1, dadurch gekennzeichnet, dass die Klärwassersammelleitung (5) entlang des Kanalbodens verlegt ist.

3. Vorrichtung nach Anspruch 1 oder 2, dadurch gekennzeichnet, dass die Klärwassersammelleitung (5) aus mehreren gesonderten Leitungen (5a, b, c...n) besteht.

4. Vorrichtung nach einem der Ansprüche 1 bis 3, dadurch gekennzeichnet, dass die Zulaufleitung (6) und die Rücklaufleitung (9) für das Klärwasser im Innern der Abwasserstichleitung (4) verlaufen.

5. Vorrichtung nach einem der Ansprüche 1 bis 4, dadurch gekennzeichnet, dass die Klärwasserrücklaufleitung (9) eine Abzweigleitung (10) aufweist, die zu einem Verbraucher (11, 113) führt.

6. Vorrichtung nach einem der Ansprüche 1 bis 5, dadurch gekennzeichnet, dass in der Klärwassersammelleitung (5) Pumpstationen mit Umwälzpumpen vorgesehen sind, die das Klärwasser im Gegenstrom zu dem zum Klärwerk (100) fliessenden Abwasser zu den Wärmepumpen (7) befördern.

7. Vorrichtung nach Anspruch 6, dadurch gekennzeichnet, dass die Umwälzpumpen in Litfasssäulen untergebracht sind.

8. Vorrichtung nach einem der Ansprüche 1 bis 7, dadurch gekennzeichnet, dass in der Klärwassersammelleitung (5) Temperaturfühler vorgesehen sind, die den Zufluss von Klärwasser in die Klärwasserzulaufleitungen (6) nach Massgabe der Temperatur des in der jeweiligen Klärwassersammelleitung (5) fliessenden Klärwassers regeln.

9. Vorrichtung nach einem der Ansprüche 1 bis 8, dadurch gekennzeichnet, dass in der Klärwassersammelleitung (5) Relaiseinrichtungen vorgesehen sind, die den Rückfluss gekühlten Klärwassers aus den Klärwasserrücklaufleitungen (9) in wählbare einzelne Klärwasserleitungen (5a, b, c...n) nach Massgabe von deren Füllzustand regeln.

10. Vorrichtung nach einem der Ansprüche 1 bis 9, dadurch gekennzeichnet, dass eine die Klärwassersammelleitung (5) vom übrigen Abwasserkanal (1) trennende Trennwand (12) durch Fertigwandteile gebildet ist, die derart bemessen sind, dass sie durch einen Inspektionsschacht (2) des Abwasserkanals (1) in diesen einführbar sind.

11. Vorrichtung nach Anspruch 10, dadurch gekennzeichnet, dass die Trennwand (12) im wesentlichen in der unteren Hälfte des Abwasserkanals (1) verläuft, wobei die Trennwandlängsränder (13, 13a) etwa auf halber Höhe der Innenwand des Abwasserkanals (1) anliegen.

12. Vorrichtung nach Anspruch 10 oder 11, dadurch gekennzeichnet, dass die Trennwand (12) in geringem Abstand zum Kanalboden einen im wesentlichen ebenen, begehbaren Mittelbereich (24) aufweist.

13. Vorrichtung nach einem der Ansprüche 10 bis 12, dadurch gekennzeichnet, dass die einzelnen parallel zueinander angeordneten Leitungen (5a, b, c...n) der Klärwassersammelleitung (5) jeweils wenigstens an einem Teilbereich ihrer Wand mit der Trennwand (12) verbunden sind.

14. Vorrichtung nach einem der Ansprüche 10 bis 13, dadurch gekennzeichnet, dass die Trennwand (12) aus biegsamem Material besteht und derart in den unteren Bereich des Abwasserkanals (1) einfügbar ist, dass die einzelnen mit ihr verbundenen Klärwasserleitungen (5a, b, c...n) mit ihrem unteren Wandbereich der Innenwand des Abwasserkanals (1) anliegen.

15. Vorrichtung nach einem der Ansprüche 10 bis 14, dadurch gekennzeichnet, dass die Trennwand (12) eine Vielzahl von Längsabschnitten umfasst, die an ihren jeweiligen Stirnenden (26, 27) von der Klärwassersammelleitung (5) losgelöst sind und zur Verbindung von aneinandergrenzenden Trennwandabschnitten mit ineinan-

dergreifenden, oberen und unteren Verbindungs-elementen (17, 18, 19) ausgestattet sind.

16. Vorrichtung nach Anspruch 15, dadurch gekennzeichnet, dass die Verbindungselemente nach Art eines Druckknopfverschlusses (19) ausgebildet sind.

17. Vorrichtung nach Anspruch 15 oder 16, dadurch gekennzeichnet, dass die Enden (26, 27) der Trennwandlängsabschnitte mittels Haken (17) gegen Auseinanderrutschen gesichert sind.

18. Vorrichtung nach einem der Ansprüche 15 bis 17, dadurch gekennzeichnet, dass die einzelnen Klärwasserleitungen (5a, b, c...n) durch miteinander vereinigte Leitungsstücke gebildet sind, die im Bereich der einander übergreifenden Enden (26, 27) der Trennwandlängsabschnitte mit ihren Enden übereinandergeschoben sind.

19. Vorrichtung nach einem der Ansprüche 1 bis 18, dadurch gekennzeichnet, dass die Klärwasserzulauf- und -rücklaufleitungen (6, 9) als Doppelschläuche (28) ausgebildet sind.

20. Vorrichtung nach Anspruch 19, dadurch gekennzeichnet, dass die Doppelschläuche (28) in den Abwasserstichleitungen (4) an deren vom abfliessenden Abwasser freien Wandbereich befestigt sind.

21. Vorrichtung nach Anspruch 19, dadurch gekennzeichnet, dass die Doppelschläuche (28) mittels Haftmagneten (29) an der aus Eisen bestehenden Wand der Abwasserstichleitungen (4) befestigt sind.

22. Vorrichtung nach einem der Ansprüche 1 bis 21, dadurch gekennzeichnet, dass die Abwasserstichleitungen (4a) mit angeformten Doppelkammerrohren (6a, 9a) für Klärwasserzulauf- bzw. -rücklaufleitungen versehen sind.

## Claims

1. A device for the recovery of heat from waste water, from which heat is removed by heat pumps (7), which heat serves to heat heating water circulating in heating circuits (105) and to heat process water of drinking water quality, the device comprising at least one waste water channel (1) leading to a clarification plant (100), which channel (1) is connected by tap lines (4) to waste water supply points (113), and comprising heat pumps (7) provided at the waste water supply points (113) to remove the heat energy from a a water circuit serving as a secondary medium and acting as a heat exchanger with the waste water, characterized in that in the waste water stream of the waste water channel (1) there is provided a clarified water collecting line (5) which at least partially receives the clarified waste water coming from the clarification plant (100), is in heat exchanging relationship with the waste water stream and leads from the clarification plant (100) to the heat pumps (7) of the waste water supply points (113) and vice versa, and in that the clarified water collecting line (5) is connected with the heat pumps (7) of the waste water supply points (113) by a feed line (6) and a return flow line (9).

2. A device according to claim 1, characterized in that the clarified water collecting line (5) is laid along the channel bottom.

3. A device according to claim 1 or claim 2, characterized in that the clarified water collection line (5) consists of several separate lines (5a, b, c...n).

4. A device according to any one of claims 1 to 3, characterized in that the feed line (6) and the return flow line (9) for the clarified water run inside the waste water tap line (4).

5. A device according to any one of claims 1 to 4, characterized in that the clarified water return flow line (9) comprises a branch line (10), which leads to a consumer (11, 113).

6. A device according to any one of claims 1 to 5, characterized in that in the clarified water collecting line (5) there are provided pumping stations with recirculation pumps, which convey the clarified water to the heat pumps (7) in countercurrent flow to the waste water flowing to the clarification plant (100).

7. A device according to claim 6, characterized in that the recirculation pumps are accommodated in advertising columns.

8. A device according to any one of claims 1 to 7, characterized in that in the clarified water collecting line (5) there are provided temperature sensors, which regulate the inflow of clarified water into the clarified water feed lines (6) according to the temperature of the clarified water flowing in the respective clarified water collection line (5).

9. A device according to any one of claims 1 to 8, characterized in that in the clarified water collecting line (5) there are provided relay devices which regulate the return flow of cooled clarified water out of the clarified water return flow lines (9) into selectable individual clarified water lines (5a, b, c...n) according to how full they are.

10. A device according to any one of claims 1 to 9, characterized in that a partition wall (12) separating the clarified water collecting line (5) from the other waste water channel (1) is constructed of prefabricated wall units which are of such dimensions that they can be guided into the waste water channel (1) through an inspection shaft (2) therein.

11. A device according to claim 10, characterized in that the partition wall (12) is located substantially in the lower half of the waste water channel (1), the longitudinal partition wall edges (13, 13a) adjoining the inner wall of the waste water channel (1) at approximately half its height.

12. A device according to claim 10 or claim 11, characterized in that the partition wall (12) comprises a substantially flat central area (24) which can be walked on and is at a small distance from the channel bottom.

13. A device according to any one of claims 10 to 12, characterized in that the individual, parallelly arranged lines (5, b, c...n) of the clarified water collecting line (5) are each connected at least over one part of their walls with the partition wall (12).

14. A device according to any one of claims 10 to 13, characterized in that the partition wall (12) consists of pliable material and is so insertable into the lower area of the waste water channel (1) that the individual clarified water lines (5a, b, c ...n) connected therewith adjoin the inner wall of the waste water channel (1) with their lower wall area.

15. A device according to any one of claims 10 to 14, characterized in that the partition wall (12) comprises a plurality of longitudinal sections which are released at their respective ends (26, 27) from the clarified water collecting line (5) and are provided with interconnecting upper and lower connecting members (17, 18, 19) to connect adjacent partition wall sections.

16. A device according to claim 15, characterized in that the connecting members are constructed in the manner of a press fitting closure (19).

17. A device according to claim 15 or claim 16, characterized in that the ends (26, 27) of the longitudinal partition wall sections are secured against separation by means of hooks (17).

18. A device according to any one of claims 15 to 17, characterized in that the individual clarified water lines (5a, b, c...n) are formed of interconnected line pieces whose ends are pushed over each other in the area of the mutually overlapping ends (26, 27) of the longitudinal partition wall sections.

19. A device according to any one of claims 1 to 18, characterized in that the clarified water feed and return flow lines (6, 9) are constructed as double hoses (28).

20. A device according to claim 19, characterized in that the double hoses (28) are secured in the waste water tap lines (4) at their wall area which is free from outflowing waste water.

21. A device according to claim 19, characterized in that the double hoses (28) are secured by means of holding magnets (29) to the wall, consisting of iron, of the waste water tap lines (4).

22. A device according to any one of claims 1 to 21, characterized in that the waste water tap lines (4a) have formed thereon double chamber tubes (6a, 9a) for clarified water feed and return flow lines.

## Revendications

1. Dispositif destiné à la recupération de la chaleur à partir d'eaux usées, à partir desquelles on prélève la chaleur par des pompes à chaleur (7) et qui sert à réchauffer l'eau de chauffage circulant dans des circuits de chauffage (105) et à augmenter la température d'eau de puisage ayant une qualité d'eau potable, avec au moins une canalisation d'eaux usées (1) menant à une station d'épuration (100) qui est raccordée par des conduites de dérivation (4) à des points de fourniture des eaux usées (113), et avec des pompes à chaleur (7) prévues aux points de fourniture des eaux usées (113) pour le prélèvement de l'énergie thermique d'un circuit d'eau servant de fluide secondaire, se trouvant en échange thermique avec les eaux usées, caractérisé

– en ce qu'une conduite de recueil des eaux épurées (5) est montée dans le courant des eaux usées de la canalisation d'eaux usées (1), laquelle conduite reçoit au moins en partie des eaux usées épurées provenant de la station d'épuration (100), se trouve en relation d'échange thermique par rapport au courant des eaux usées et mène depuis la station d'épuration (100) aux pompes à chaleur (7) des points de fourniture des eaux usées (113) ainsi qu'à partir de ces derniers en retour dans le sens inverse,

– et en ce que la conduite de recueil des eaux épurées (5) est reliée aux pompes à chaleur (7) des points de fourniture des eaux usées (113) respectivement par l'intermédiaire d'une conduite d'amenée (6) et d'une conduite de recirculation (9).

2. Dispositif selon la revendication 1, caractérisé en ce que la conduite de recueil des eaux épurées(5) est posée le long du fond de la canalisation.

3. Dispositif selon la revendication 1 ou 2, caractérisé en ce que la conduite de recueil des eaux épurées (5) consiste en plusieurs conduites séparées (5a, b, c...n).

4. Dispositif selon l'une des revendications 1 à 3, caractérisé en ce que la conduite d'amenée (6) et la conduite de recirculation (9) pour les eaux épurées passe à l'intérieur de la conduite de dérivation des eaux usées (4).

5. Dispositif selon l'une des revendications 1 à 4, caractérisé en ce que la conduite de recirculation (9) des eaux épurées comporte une conduite de branchement (10) qui mène à un consommateur (11, 113).

6. Dispositif selon l'une des revendications 1 à 5, caractérisé en ce que dans la conduite de recueil des eaux épurées (5) sont prévues des stations de pompage avec des pompes de recirculation qui acheminent l'eau épurée à contre-courant par rapport aux eaux usées s'écoulant vers la station d'épuration (100), vers les pompes à chaleur (7).

7. Dispositif selon la revendication 6, caractérisé en ce que les pompes de circulation sont logées dans des colonnes du type colonnes à affiches ou colonnes Morris.

8. Dispositif selon l'une des revendications 1 à 7, caractérisé en ce que dans la conduite de recueil des eaux épurées (5) sont prévus des capteurs de température qui régulent l'amenée d'eau épurée dans les conduites d'amenée d'eau épurée (5) en fonction de la température de l'eau épurée circulant dans la conduite de recueil respective des eaux épurées (5).

9. Dispositif selon l'une des revendications 1 à 8, caractérisé en ce que dans la conduite de recueil des eaux épurées (5) sont prévus des dispositifs de relais qui régulent le retour des eaux épurées refroidies en provenance des conduites de recyclage des eaux épurées (9) dans différentes conduites d'eaux épurées pouvant être sélectionnées (5a, b, c...n) en fonction de leur état de remplissage.

10. Dispositif selon l'une des revendications 1 à 9, caractérisé en ce qu'une paroi de séparation (12) constituée à partir d'éléments de paroi préfabriqués sépare la conduite de recueil des eaux épurées (5) du reste de la canalisation des eaux usées (1), laquelle paroi de séparation (12) est dimensionnée de telle manière qu'elle peut être introduite à travers un puits d'inspection (2) de la canalisation des eaux usées (1) dans celui-ci.

11. Dispositif selon la revendication 10, caractérisé en ce que la paroi de séparation (12) s'étend essentiellement dans la moitié inférieure de la canalisation des eaux usées (1), les bords longitudinaux de la paroi de séparation (13, 13a) venant s'appuyer sensiblement à mi-hauteur de la paroi intérieure de la canalisation des eaux usées (1).

12. Dispositif selon la revendication 10 ou 11, caractérisé en ce que la paroi de séparation (12) présente à une distance minime par rapport au fond de la canalisation une zone médiane (24) essentiellement plane, se prétant à la circulation.

13. Dispositif selon l'une des revendications 10 à 12, caractérisé en ce que les différentes conduites (5a, b, c...n) disposées parallèlement entre elles de la conduite de recueil des eaux épurées (5) sont respectivement reliées sur une zone partielle de leur paroi avec la paroi de séparation (12).

14. Dispositif selon l'une des revendications 10 à 13, caractérisé en ce que la paroi de séparation (12) consiste en une matière flexible et peut être insérée dans la zone inférieure de la canalisation des eaux useés (1), de telle sorte que les différentes conduites des eaux épurées (5a, b, c...n) reliées à celle-ci viennent en appui par leur zone de paroi inférieure avec la paroi intérieure de la canalisation des eaux usées (1).

15. Dispositif selon l'une des revendications 10 à 14, caractérisé en ce que la paroi de séparation (12) comprend plusieurs sections longitudinales qui sont séparées sur leurs extrémités frontales respectives (26, 27) de la conduite de recueil des eaux épurées (5) et sont munies, pour le raccordement des sections de paroi de séparation contiguës d'éléments de liaison inférieur et supérieur (17, 18, 19) s'imbriquant réciproquement.

16. Dispositif selon la revendication 15, caractérisé en ce que les éléments de liaison sont conçus sous forme d'un système de fermeture à bouton poussoir (19).

17. Dispositif selon la revendication 15 ou 16, caractérisé en ce que les extrémités (26, 27) des sections longitudinales des parois de séparation sont prémunies vis-à-vis de la séparation due à un glissement par des crochets (17).

18. Dispositif selon l'une des revendications 15 à 17, caractérisé en ce que les différentes conduites des eaux épurées (5a, b, c...n) sont formées par des tronçons de conduite réunis entre eux, lesquels sont emboîtés les uns dans les autres dans la zone des extrémités d'emboîtement (26, 27) des sections longitudinales des parois de séparation par leurs extrémités.

19. Dispositif selon l'une des revendications 1 à 18, caractérisé en ce que les conduites d'amenée et de recirculation des eaux épurées (6, 9) sont conçues sous forme de tuyaux flexibles doubles (28).

20. Dispositif selon la revendication 19, caractérisé en ce que les tuyaux doubles (28) sont fixés dans les conduites de dérivation des eaux usées (4) en leur zone de paroi exempte d'écoulement d'eaux usées.

21. Dispositif selon la revendication 19, caractérisé en ce que les tuyaux flexibles (12, 28) sont fixés aux moyen d'aimants adhérents (29) sur la paroi en fer des conduites de dérivation des eaux usées (4).

22. Dispositif selon l'une des revendications 1 à 21, caractérisé en ce que les conduites de dérivation des eaux usées (4a) sont munies de tubes à chambre double (6a, 9a) pour les conduites d'amenée ou de recyclage des eaux épurées.

# Fig. 1

## Fig. 2 a

a    b    c    5        n

## Fig. 2 b

13        13a

5a

5b

5        5n

## Fig. 3 a

12        26    5

17     17     19    19

5    27    18    18        12

Fig. 3b

18

27

18

18

Fig. 4

28    29

9      6

Fig. 5

4a

9a      6a

# Fig.6